# EUROPEAN PATENT SPECIFICATION

(11) **EP 0 986 803 B1**
(45) Date of publication and mention of the grant of the patent: **24.07.2002**
(21) Application number: 98922558.6
(22) Date of filing: 26.05.1998
(51) Int. Cl.: G09B 21/00, H04R 1/08, H04N 5/225, H04N 7/18

(54) **VIDEO-ASSISTED APPARATUS FOR HEARING IMPAIRED PERSONS**
VIDEOUNTERSTÜTZTE EINRICHTUNG FÜR HÖRBEHINDERTE
DISPOSITIF ASSISTE PAR VIDEO POUR MALENTENDANTS

(30) Priority: 02.06.1997 US 867024
(43) Date of publication of application: 22.03.2000
(73) Proprietor: Lapalme, Marie, Quèbec J4B 3X3 (CA)
(72) Inventor: Lapalme, Marie, Quèbec J4B 3X3 (CA)
(74) Representative: Bonnetat, Christian
(86) International application number: CA9800509
(87) International publication number: WO9856209

(56) References cited:
- EP-A- 0 457 053
- JP-A- 9 134 194
- US-A- 4 368 459
- US-A- 4 546 383
- US-A- 5 313 522
- US-A- 5 473 726

## Description

### FIELD OF THE INVENTION

The present invention relates to aid apparatuses for hearing impaired persons, and more particularly to a video-assisted apparatus for hearing impaired persons.

### BACKGROUND OF THE INVENTION

It is common for hearing impaired persons to use portable amplifier devices that can be hooked on and supported by the ear, and more particularly behind the auricle, with a semi-flexible pipe extending into the acoustic meatus. These devices amplify the sounds so as to allow the hearing impaired person to hear what is said. However, when the hearing disability is acute, or when the person is completely deaf, these amplifier devices may not be sufficient or may be entirely useless.

People with this acute hearing disability or complete deafness communicate via a sign language and via reading the movement of the lips of the person transmitting information. Even when the hearing disability is not extremely important, reading the lips of the interlocutor is common practice, and can be used currently with the hearing aid device, to help understand the sometimes less understandable pronounciation of a speaker person. When the speaker does not have free access to use its hands during conversation, especially teachers having to manipulate board chalks, notes for their courses or other items, the reading of the lips takes a particular importance, since sign language cannot be relied upon.

However, for the lip reading to be readily accomplished, the teacher must always face its class students. Moreover, the number of students is then limited, because of the maximum distance from the teacher which can be tollerated, for lip reading by a student located far away from the teacher will be significantly hampered, if not completely impossible. Also, a teacher facing a particular portion of the class students would do so to the detriment of others. Finally, the teacher may not readily use the blackboard usually located at the front end of the class, behind him, while simultaneously talking, for he would then be turning his back to the class students, who could not see his lips and therefore could not accomplish the lip reading.

In an era where most types of professions are accessible to the hearing impaired or deaf persons, it is possible also that the teacher be called upon to manipulate machinery, work on wood components, or work in many other fields requiring hand held equipment, in which sign language is difficult, if not impossible, during the equipment operation, and in which lip reading can be difficult, depending on the equipment used.

United States patent No. 4,546,383 issued in 1985 (inventors JF Abramatic et al.) discloses a method and apparatus for visual telecommunications, in particular for use by the deaf. The system retransmits images over a phone line, for example, with this retransmission not occurring in real time. Indeed, the image transmitted is a "cartoon-like" image of the person speaking, for allowing a deaf person to recognize the sign language used by the speaker. Image compression software is used to transmit the image, and additional filters and difference detectors are used to send only the data which is essential for transmitting the image of the speaker: thus, such treatment of the image precludes real-time transmission. No real time capture and transmission of an image of the speaker's face only occurs. No portable camera is used on a headset frame which would allow the speaker to move relative to the camera.

### OBJECTS OF THE INVENTION

It is the gist of the invention to provide an apparatus for allowing hearing impaired persons or deaf persons to understand a speaker by reading his lips, while allowing this speaker to have freedom of movement, especially of his head and hands.

It is an important object of this invention that this apparatus be light and uncumbersome for the person using it.

It is yet another object of this invention that many hearing impaired or deaf persons may simultaneously profit from this apparatus used by a single speaker, notwithstanding their position and distance relative to the speaker.

### SUMMARY OF THE INVENTION

The present invention relates to a video-assisted apparatus for hearing impaired persons.

More particularly, the present invention relates to a video-assisted apparatus for use by a speaker and hearing impaired persons, comprising: a) a headset frame to be removably installed on the head of the speaker; b) a miniature camera (preferably also including an integral microphone) carried by said headset frame ahead of the person's mouth and destined to target the speaker's mouth for catching continuous video images (and optionally additional audio data) therefrom; c) a transmitter operatively linked to said camera, for coding the video images caught by the camera and for real-time transmission thereof as a signal, said transmitter including power means for powering said camera and said transmitter; d) at least one receiver, for receiving the signal from said transmitter and decoding it into video images; and e) at least one visualizing means operatively linked to one said receiver, for visualizing the images decoded by said receiver; wherein at least the lip movement and up to all facial expressions of the speaker can be followed in real-time simultaneously by any number of hearing impaired persons looking at the visualizing means, notwithstanding the head orientation or position of the speaker relative to the hearing impaired persons.

Preferably, said headset frame comprises a head-engaging portion, an elongated camera holding arm having a first end supported by said head engaging portion and a second end supporting said camera, first adjustment means for selectively adjusting the position of said arm relative to said head-engaging portion, and second adjustment means for selectively adjusting the orientation of said camera relative to said arm, wherein said camera can be positioned exactly ahead of the speaker's mouth.

Advantageously, said transmitter is located at a location on the speaker remote from said headset frame, said video assisted-apparatus further comprising a wire linking said camera to said transmitter.

Preferably, said transmitter codes and transmits the images in either one of radio waves, micro waves and infra-red wave lengths, and transmits a wireless airborne signal to said at least one receiver. Preferably also, said video-assisted apparatus comprises a number of receivers each linked to a visualizing means.

Alternately, said video-assisted apparatus comprises one receiver linked to a number of separate visualizing means.

Preferably, said visualizing means is either one of a cathode tube monitor screen, a computer screen, a liquid emitting diode (LED) screen or a light-emitting diode (LCD) screen, or plasma display panel.

The present invention also relates to the use of a video assisted apparatus for helping hearing impaired persons in following the speech of a speaker, where said video-assisted apparatus comprises a portable miniature camera (and preferably also a microphone) removably installed ahead of the speaker and targetting the speaker's mouth, a transmitter operatively linked to said camera, for coding the video images caught by the camera and for real-time transmission thereof as a signal, said transmitter including power means for powering said camera and said transmitter, said apparatus further comprising at least one receiver, for receiving the signal from said transmitter and decoding it into video images, and at least one visualizing means operatively linked to one said receiver, for visualizing the images decoded by said receiver.

The invention also relates to a teaching aid system for assisting teachers in teaching hearing impaired students, comprising: a) a headset including a main rounded body, for fitting onto the head of a teacher, and attachment elements, for releasably attaching said headset body around the teacher's head; b) an elongated arm having an inner end integral to said headset main body and an outer free end, said elongated arm shaped to follow the contour of the teacher's face and of a length sufficient so that its outer free end come in general register with the teacher's lips; c) a lightweight mirror element, integrally carried by said arm outer free end and in optical register with the teacher's lips, and including a lens of such a size and orientation as to be able to capture in full at least the lips of the teacher; d) a camera element, integrally carried by said headset main body and defining a lens having an optical path intersecting said mirror lens element, wherein at least the teacher's lips - and preferably the full face thereof - are fully visible to the camera lens element via optical reflection onto the mirror element lens; e) a video monitor element, adapted to be positioned ahead of a student and to be visually inspected by this student; and f) first and second transceiver elements, the former carried by said teacher and operatively coupled to said camera element, the latter operatively coupled to said video monitor element for realtime downlink of data transmitted by said first transceiver element.

Preferably, the spatial position of said mirror is laterally offset relative to the teachers' sagittal plane by an acute angle, in direct register with the teacher's cheeks. A microphone could then be carried integrally by said arm outer free end alongside said mirror element and in acoustic register with the teacher's mouth; and an audio speaker unit, to be mounted in close proximity to a student and in acoustic register with the student's ears, wherein said transceiver element further operatively connects said microphone to said speaker unit.

Alternately, the audio receiving unit could be directly coupled and operatively connected to an audio output unit, such as the hearing aids prosthesis used externally or internally of the ears by partly deaf handicapped persons, or also to removable ear muffs for less handicaped or even unhandicapped persons.

Preferably, said acute angle is in the range between 30° and 45° - and most preferably of about 30° - relative to the sagital plane of the teacher, so that the student may gain dynamic isometric view of the teacher's moving lips to improve visual lip reading abilities of the students.

As an optional advantageous feature of the present invention, there could be added an additional video monitor element, for example an LCD video screen panel carried by a snap bracket to the teacher's belt, and adapted to be positioned generally speaking ahead of the teacher and to be visually inspectable by the teacher; and a third transceiver element, operatively coupled to said additional video monitor for real-time downlink of data transmitted by said first transceiver element; wherein the teacher will be able to constantly monitor whether her lips are continuously captured in full by said camera element, whenever said headset is accidentally displaced or removed and reinstalled on the teacher's head, and accordingly enable adjustment of said headset position if need be.

### BRIEF DESCRIPTION OF THE DRAWINGS

In the annexed drawings:
Figure 1 is a perspective view showing a school teacher wearing a headset equipped according to a first embodiment with a miniature camera and according to the video-assisted apparatus of the invention, with two students located behind her at their respective desks, on which are installed video monitor screens;
Figure 2 is an enlarged perspective view of the first embodiment of headset and camera portion of the video-assisted apparatus, with the headset being partly fragmented so as to partly show the microphone therein and with the camera support arm being partly broken, and suggesting with several arrows the possible headset adjustments for orienting and positioning the camera relative to the teacher's mouth and to compensate for various head sizes;
Figure 3 is a perspective view at an enlarged scale of a second embodiment of headset, where the camera is shifted rearwardly to a position close to the ear attachment member thereof, and with a convex mirror being carried ahead of the headset user with integral microphone;
figure 4 is an isometric view at a reduced scale of a professor wearing the second embodiment of headset and of a student against his desk wearing a second embodiment of head-carried video-monitor screen; and
Figure 5 is an enlarged lateral side elevational view of the student's head with the second embodiment of video monitor and sound transceiver unit.

### DETAILED DESCRIPTION OF THE PREFERRED EMBODIMENT

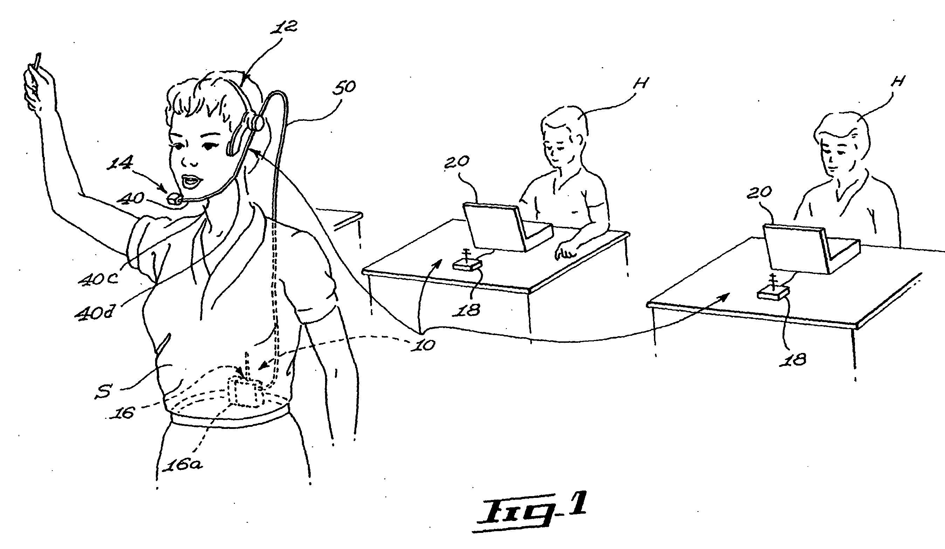

Figure 1 shows a preferred embodiment of a video-assisted apparatus 10 for use by a speaker S and a number of hearing impaired persons H. Apparatus 10 comprises a headset frame 12 equipped with a small camera 14, a transmitter 16, a number of remotely located receivers 18 and an equal number of visualizing means in the form of video monitors 20. Monitors 20 may be e.g. a cathode tube (television), a lap top computer, an LED or a LCD video screen, a plasma display panel, and the like.

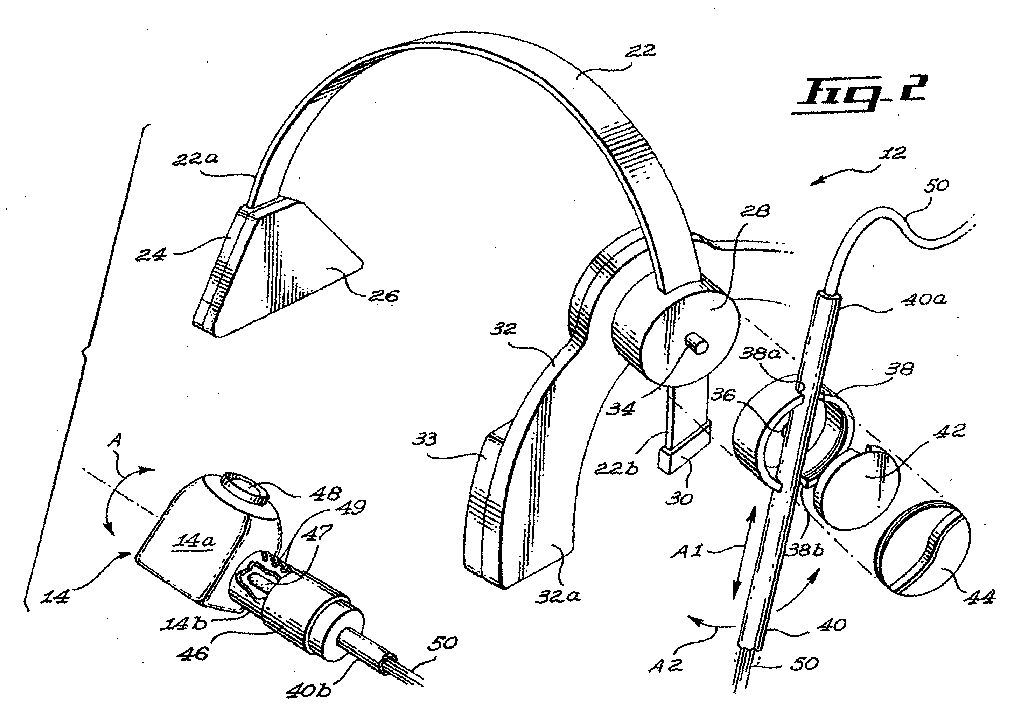

As shown in figure 2, headset frame 12 ressembles conventional receptionist-style phone headset frames and comprises a flat arcuate rigid headpiece 22 defining a first and a second end 22a and 22b, headpiece 22 forming substantially a 180° (half-turn) arc. Rigid headpiece 22 comprises a slight flexibility, to allow its two ends 22a, 22b to be manually forcibly parted, to be inserted onto a person's head and thereafter snugly engage same, as will be explained hereinafter.

On headpiece first end 22a is fixed a triangular, rigid first abutment member 24, on the interior face of which a temple padding cushion 26 is provided for the comfort of the user's head.

Headpiece 22 frictionally engages and extends through a cylindrical socket member 28 and its second end 22b is provided with a circumferential stopper 30 that prevents socket 28 from accidentally releasing headpiece 22. By forcibly sliding headpiece 22 through socket member 28 against the friction force therein, an adjustment of the dimension of headset 12 is acquired to fit heads of different sizes, as known in the art. Socket member 28 is fixedly attached to a rigid, inverted U-shaped second abutment member 32 having a pair of downwardly extending legs 32a, with only one of these legs being shown in figure 2 for clarity of the drawing. Each leg 32a is provided with an interior padding cushion 33, for the comfort of the user's head.

The outer flat surface of cylindrical socket 28 is equipped with a small axially projecting stud 34 which frictionally snaps into a complementary hole 36 made through the inner flat surface of a hollow cylindrical dial 38 which rests against and axially and diametrally registers with socket 28. Dial 38 has a pair of diametrally aligned notches 38a, 38b axially extending in its cylindrical peripheral surface, opposite socket 28, through which a hollow, elongated cylindrical camera supporting arm 40 is installed. An inner grooved compression cap 42 engages and holds arm 40 at the position in which it is installed, due to a threaded outer cap 44 which threadingly engages dial 38 so as to apply axial pressure on compression cap 42 which frictionally traps arm 40 in notches 38a, 38b to prevent linear displacement thereof. Therefore, the position of arm 40 can be selectively adjusted along dial 38 by removing caps 42, 44 and sliding arm 40 inside notches 38a, 38b, as suggested by arrow A1 in figure 2; the position of arm 40 can then be frictionally fixed relative to dial 38 by installing caps 42, 44 and threadingly tightening outer cap 44 on dial 38. Moreover, the angular position of arm 40 can be selectively adjusted by forcibly turning dial 38 against the friction force of stud 34 against hole 36, as suggested by arrow A2 in figure 2, and then releasing arm 40 at the desired angular position.

Supporting arm 40 defines a first and a second opposite ends 40a, 40b, with first end 40a being located proximate dial 38 and second end 40b supporting camera 14. Figure 1 further shows that arm 40 is elbowed at two intermediate locations, 40c and 40d, for ergonomically conforming to the general shape of the face of the speaker S, as is known in the state of the art headsets.

Camera 14 is of the conventional miniature type. Preferably, it has a main housing 14a being approximately cubic in shape with a side dimension of for example 1,25 centimeters. This miniature camera is small, uncumbersome and of light weigth, and therefore will not hamper or distract the speaker S when she is talking. Optionally, a small microphone 47 is further added, being mounted into a casing 14b integrally mounted transversely to housing 14a. Casing 14b includes a number of apertures 49 for free through passage and transmit them to remote transceivers, e.g. the portable hearing impaired persons' transceivers. As seen in figure 2, camera 14 is installed on a joint 46 rotatably mounted onto side casing 14b, and has a lens 48 destined to target the mouth of the speaker, as will be explained hereinafter. Joint 46 is shown to be cylindrical and thus allows up and down orientation adjustment of lens 48 by rotation of camera 14 according to arrow A3 in figure 2. In an alternate embodiment, not shown, joint 46 could also be a universal ball-joint, allowing for rotation along all three perpendicular axes of camera 14, so that lens 48 may be selectively oriented in a great variety of directions.

Figures 1 and 2 suggest that supporting arm 40 is hollow, and houses a wire 50 connected to camera 14, running in arm 40 and protruding beyond the arm (tip) first end 40a and down behind the back of the speaker S. Wire 50 is plugged to transmitter 16 at its other (bottom) end, and thus would link both camera 14 and microphone 47 thereto. Transmitter 16 includes an intrinsic power means, preferably in the form of a 12 volts battery, for powering transmitter 16 and the camera (and the optional microphone 47).

In use, a speaker S, such as a teacher for hearing impaired children H as shown in figure 1, wears headset frame 12 on her head, and adjusts the position of camera 14 relative to her mouth, by means of the rotation of dial 28, of linear dispacement of arm 40 inside dial 28, and of rotation of camera 14 on joint 46. The purpose of adjusting camera 14 is for its lens 48 to precisely target the mouth of speaker S and to be located generally ahead of the speaker's mouth, so that the images caught by camera 14 are the images of at least the mouth and preferably also the full face of the speaker S.

These images (and the sound waves from the optional microphone 47) are transmitted through wire 50 into transmitter 16, which codes the images into a proper signal, preferably being either one of radio waves, micro waves and infra-red waves. This wireless signal is transmitted by transmitter 16, and received by a number of receivers 18 located on the desks of the hearing impaired persons H. The receivers 18 decode the signal sent by transmitter 16 into images (and sound in the above-noted option), that can be visualized by proper visualizing means 20, e.g. cathode tube (TV), lap top, LED or LCD screens, or plasma-display panels.

Thus, the hearing impaired persons H can read the lips of the speaker S at all times, even if she has her back turned to persons H, e.g. when she writes on a blackboard against the wall as suggested in figure 1.

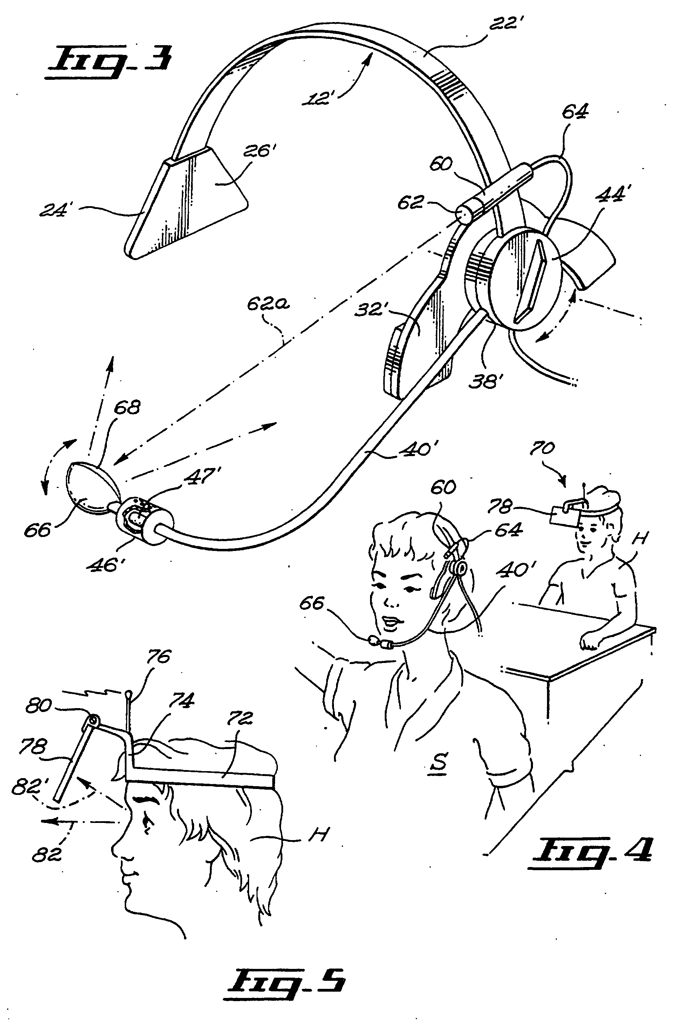

Linking camera 14 to transmitter 16 by a wire 50 prevents transmitter 16 from having to be located on headset frame 12 proper, which may with time render same uncomfortably heavier. The camera 14 could even be shifted rearwardly away from the front outer end of arm 40, and replaced by a mirror (see figures 3-5, of which more later). With wire 50, transmitter 16 can thus be located on a remote location on the speaker S, for example attached to her belt as shown in figure 1. It could also be inserted into a shirt pocket or the like remote location. The purpose of this is to prevent this more heavy and cumbersome equipment from being supported by the speaker's head. It would be at least as convenient, however, that the transmitter be located on the headset frame head-engaging portion, including a small antenna thereon, especially if a lighter power means and transmitter assembly is available.

Figure 1 further shows that transmitter 16 comprises an enclosed battery section 16a, which may be distinct therefrom, wherein a power supply battery may be inserted.

In the alternate embodiment of figures 3-4 of the drawings, corresponding elements are primed relative to the embodiment of figures 1-2. Headset 12' is similar to headset 12, except for the following two main differences:
a) the heavy camera unit is not carried anymore at the outer free end 14 of arcuate arm 40, but rather, at the inner end of arcuate arm 40'. More particularly, the camera is lodged into a cylindroid casing 60 having a lens 62 at one end and a semi flexible elongated carrier arm or wire 64 at the other end, the latter wire being fixedly anchored to ring 38'. Casing 60 can be manipulated to forcibly change the axial orientation 62a of the line of sight of lens 62, with semi-flexible arm 64 yielding to the pressure; but once manual bias is released, casing 60 will immobilize to maintain the lens line of sight 62a at the selected orientation.
b) a mirror element 66 is carried at the outer free end of arcuate arm 40'. Mirror 66 includes a lens 68 located in the line of sight 62a of ear mounted tubular camera 60. Mirror lens 68 is preferably convex, as illustrated, but could also have alternate shapes including a concave shape, provided the location of mirror 66 ahead of the teacher's face is such as to enable visual capture of the full face of the teacher including her lips. The optional microphone 47' is mounted integrally adjacent the mirror housing 66, in the same general way as it was attached to the camera mount 14a of the first embodiment.

It is to be noted that the preferred exact location of the camera 48 of the first embodiment, or mirror 66 of the second embodiment, ahead of the teacher, should not be directly ahead of the teacher's mouth, but rather at an acute angle relative to the saggital plane of the teacher. In particular, it is envisioned that an angular range of between 30 and 45° of lateral offset for the camera 48 or mirror 66 relative to the saggital plane, would be preferred. The reason for this is that, at that angular range, the camera 48 or mirror 66 would be in register with the cheeks of the teacher, while still remaining in visual albeit laterally offset visual register to the teacher's lips; such an isometric orientation of the camera or mirror would be advantageous since it would provide the unexpected result of clearly improving the lip-reading ability of the students, because a three-dimensional impression of the lip movements would be created at the level of the two dimensional visual reproduction on the students' video monitors 20 or 78.

A more simple while still acceptable embodiment of apparatus would include the following components:
1) Student: a) Video monitor - color Portavision 5 inches model, Radio Shack; or preferably, a LCD video screen, e.g. from Sony; b) FM receiver - model 900AMBBR, Microtech Electronics (San Clemente, CA);
2) Teacher: a) transmitter - FM wavelength emitter, model Minilink 001823, Microtech Electronics, with on/off switch;
   b) 2 x 6 volts batteries, 1.2 Amp. "Exaltor"; c) micro color solid state board camera with 4.4mm diameter lens, and with digital processing, model UN411E ultra micro remote color CCD camera from "Elmo".

Obviously, the invention is not limited to such a given embodiment. The camera, in particular, may be one of many known miniature cameras sold on the market. The known technologies include optical fibre-based cameras, CMOS technology cameras, medical-type cameras (usually enclosed in a protective casing), or the above-mentioned solid state board camera. Also, it is envisioned that the transmitter be included with the camera (and the optional microphone) in a single casing.

Throughout this application, reference has been made to hearing impaired persons, but it is understood that completely deaf persons are included therein.

Any minor modifications brought to the present invention as described herein which do not extend beyond its scope, are considered to be included therein.

For example, although each student H in figure 1 is shown to have one receiver 18 and one visualizing screen 20 on his desk, it is understood that a single receiver 18 could be provided for a number of visualizing screens 20, e.g. if all the visualizing screens 20 were network-linked computer screens. Also, a single receiver could be linked to a single visualizing means in the form of a screen, preferably a giant-sized screen, facing all hearing impaired persons H. Also, although much more cumbersome, copper or optic fiber wiring could be used to carry the signal from transmitter 16 to receiver 18 instead of airborne waves.

Figures 4-5 show an alternate video monitor system 70 for the students, which can be used with either the first embodiment of teacher's headset 12 illustrated in figures 1-2, or with the second embodiment of teacher's headset 12' illustrated in figures 3-4. Alternate video system 70 includes a head band 72, e.g. an elastic headband, from which transversely upwardly depends an elbowed rigid arm 74. Elbowed arm 74 forms a small obtuse angle, and transversely carries at its elbow a transceiver unit 76, for audio down-link with the corresponding transceiver unit 16 of the teacher's microphone 47 (or 47'). Moreover, rigid arm 74 further carries at its outer free end a transversely mounted flat screen video monitor 78, connected thereto by an adjustable pivot mount 80. The elbowed arm angle, the orientation of screen 78 from pivotal adjustment of pivot mount 80, and the size of flat screen 78 are such that the student's line of sight 82 to the teacher ahead of him is unhampered by the lower edge portion of the screen 78, which clears this line of sight 82, while at the same time enabling free and easy visual inspection of the video monitor screen 78 by the student along alternate raised line of sight 82'.

It is understood that the headset of the present invention could be modified and be of any suitable desired configuration, although the telephone receptionist style is convenient. Also, the camera support arm could just as well be located on the righthand side of the headset, rather than on the left-hand side as shown in the drawings.

Moreover, the apparatus described in the present disclosure can be of use for persons without any hearing disabilities, particularly for children and teenagers located well away from a teacher and who will use lip reading as complementary means for understanding the conversation; this method helps to focus the student's attention on understanding the meaning of the what is said, rather than solely directing his attention on hearing what is said.

## Claims

1. A video-assisted apparatus (10) for use by a speaker and hearing impaired persons, **characterized in that** said video-assisted apparatus (10) comprises:
a) a headset frame (12) to be removably installed on the head of the speaker;
b) a miniature camera (14) carried by said headset frame ahead of the person's mouth and destined to target at least the speaker's mouth for catching continuous video images therefrom;
c) a transmitter (16) operatively linked to said camera, for coding the video images caught by the camera and for real-time transmission thereof as a signal, said transmitter including power means for powering said camera and said transmitter;
d) at least one receiver (18), for receiving the signal from said transmitter and decoding it into video images; and
e) at least one visualizing means (20) operatively linked to one said receiver, for visualizing the images decoded by said receiver;
wherein at least the lip movements of the speaker can be followed in real-time simultaneously by any number of hearing impaired persons looking at the visualizing means, notwithstanding the head orientation or position of the speaker relative to the hearing impaired persons.

2. A video-assisted apparatus as defined in claim 1, wherein said headset frame comprises a head-engaging portion (22), an elongated camera holding arm (40) having a first end (40a) supported by said head engaging portion and a second end (40b) supporting said camera, first adjustment means (28, 34, 38, 38a, 44)for selectively adjusting the position of said arm relative to said head-engaging portion, and second adjustment means (46) for selectively adjusting the orientation of said camera relative to said arm, wherein said camera is positioned ahead of and is general register with the speaker's mouth.

3. A video-assisted apparatus as defined in claim 2, wherein said transmitter is located at a location on the speaker remote from said headset frame, said video assisted-apparatus further comprising a wire (50) linking said camera to said transmitter.

4. A video assisted apparatus as defined in claim 1, wherein said transmitter codes and transmits the images in either one of radio waves, micro waves and infra-red wave lengths, and transmits a wireless airborne signal to said at least one receiver.

5. A video assisted apparatus as defined in claim 1, comprising a number of receivers each linked to a visualizing means.

6. A video assisted apparatus as defined in claim 1, comprising one receiver linked to a number of separate visualizing means.

7. A video assisted apparatus as defined in claim 1, wherein said visualizing means (20) is either one of a television screen, a computer screen, a plasma display screen, a LED screen, or a LCD screen.

8. A video assisted apparatus as defined in claim 1, further including a microphone member, integrally mounted to said camera.

9. Use of a video assisted apparatus (10) for helping hearing impaired persons in following the speech of a speaker, **characterized in that** said video-assisted apparatus (10) comprises a portable miniature camera (14) removably installed ahead of the speaker and targetting at least the speaker's mouth, a transmitter (16) operatively linked to said camera for coding the video images caught by the camera and for real-time transmission thereof as a signal, said transmitter including power means for powering said camera and said transmitter, said apparatus further comprising at least one receiver (18), for receiving the signal from said transmitter and decoding it into video images, and at least one visualizing means (20) operatively linked to one said receiver, for visualizing the images decoded by said receiver.

10. A teaching aid system (10) for assisting teachers in teaching hearing impaired students, **characterized in that** said teaching aid comprises:
a) a headset (12') including a main rounded body (22'), for fitting onto the head of a teacher, and attachment elements (24', 32'), for releasably attaching said headset body around the teacher's head;
b) an elongated arm (40') having an inner end integral to said headset main body and an outer free end, said elongated arm shaped to follow the contour of the teacher's face and of a length sufficient so that its outer free end come in general register with the teacher's lips;
c) a lightweight mirror element (66), integrally carried by said arm outer free end and in optical register with the teacher's lips, and including a lens (68) of such a size and orientation as to be able to capture in full at least the lips of the teacher;
d) a camera element (60), integrally carried by said headset main body and defining a lens (62) having an optical path intersecting said mirror lens element,
wherein the teacher's lips are fully visible to the camera lens element via optical reflection onto the mirror element lens;
e) a video monitor element (20, 78), adapted to be positioned ahead of a student and to be visually inspected by this student; and
f) first (16) and second (18, 76) transceiver elements, the former carried by said teacher and operatively coupled to said camera element, the latter operatively coupled to said video monitor element for real-time downlink of data transmitted by said first transceiver element.

11. A teaching aid system as defined in claim 10,
wherein the spatial position of said mirror is laterally offset relative to the teachers' sagittal plane by an acute angle.

12. A teaching aid system as in claim 10,
further including a microphone (47'), carried integrally by said arm outer free end alongside said mirror element (66) and in acoustic register with the teacher's mouth; and
an audio speaker unit, to be mounted in close proximity to a student and in acoustic register with the student's ears, wherein said transceiver element further operatively connects said microphone to said speaker unit.

13. A teaching aid system as in claim 11,
wherein said acute angle is in the range between 30° and 45° relative to the sagital plane of the teacher, so that the student may gain dynamic isometric view of the teacher's moving lips to improve visual lip reading abilities of the students.

14. A teaching aid system as in claim 10,
wherein said visualizing means is a flat screen video monitor (78), and further including a student's head band (72), an elbowed rigid support arm (74) having first and second opposite ends and fixedly mounted at one end to said student's head band, and a pivot mount element (80) pivotally adjustably mounting said video monitor to the other end of said elbowed arm, wherein said video monitor is located at such a position as to be readily inspected visually by the student without the student's line of sight to the teacher being hampered.

15. A teaching aid system as in claim 10,
wherein said video monitor element (78) includes a student's head band (72), an elbowed rigid support arm (74) having first and second opposite ends and fixedly mounted at one end to said student's head band, and a pivot mount element (80) pivotally adjustably mounting said video monitor to the other end of said elbowed arm,
wherein said video monitor is located at such a position as to be readily inspected visually by the student without the student's line of sight to the teacher being hampered.

16. A teaching aid system as in claim 14,
further including a microphone (47'), carried integrally by said headset frame (12') alongside said mirror element (66) and in acoustic register with the teacher's mouth; and
an audio output unit, to be mounted in close proximity to a student and in acoustic register with the student's ears, wherein said transceiver element (76) further operatively connects said microphone to said speaker unit.

17. A teaching aid system as in claim 15,
further including a microphone (47'), carried integrally by said arm outer free end alongside said mirror element (66) and in acoustic register with the teacher's mouth; and
an audio speaker unit, to be mounted in close proximity to a student and in acoustic register with the student's ears, wherein said transceiver element further operatively connects said microphone to said speaker unit.

18. A teaching aid system as in claim 13,
wherein said acute angle is of about 30°.

19. A teaching aid system as in claim 10,
further including:
a) an additional video monitor element, adapted to be positioned ahead of the teacher and to be visually inspected by the teacher; and
b) a third transceiver element, operatively coupled to said additional video monitor for realtime downlink of data transmitted by said first transceiver element;
wherein the teacher will be able to constantly monitor whether her lips are continuously captured in full by said camera element, whenever said headset is accidentally displaced or removed and reinstalled on the teacher's head, and accordingly adjust said headset position if need be.

## Patentansprüche

1. Videounterstützte Einrichtung (10) zur Verwendung von einem Sprecher und hörgeschädigten Personen, **dadurch gekennzeichnet, dass** die videounterstützte Einrichtung (10) umfasst:
a) ein Kopfsprechhörergestell (12), das abnehmbar auf dem Kopf des Sprechers anzubringen ist;
b) eine Miniaturkamera (14), die von dem Kopfsprechhörergestell vor dem Mund der Person gehalten wird und zumindest auf den Mund des Sprechers gerichtet sein soll, um kontinuierliche Videobilder von diesem aufzunehmen;
c) einen Sender (16), der wirksam mit der Kamera in Verbindung steht, zur Codierung der von der Kamera aufgenommenen Videobilder und für die Echtzeitübertragung derselben als Signal, wobei der Sender mit Energiemittel zur Versorgung der Kamera und des Senders mit Energie ausgestattet ist;
d) mindestens einen Empfänger (18) zum Empfang des Signals von dem Sender und zur Decodierung desselben in Videobilder; und
e) mindestens ein Visualisierungsmittel (20), das mit einem Empfänger wirksam verbunden ist, zur Visualisierung der von dem Empfänger decodierten Bilder; wobei mindestens die Lippenbewegungen des Sprechers gleichzeitig von einer beliebigen Anzahl von hörgeschädigten Personen, die auf das Visualisierungsmittel blicken, in Echtzeit verfolgt werden können, und dies unabhängig von der Orientierung des Kopfes oder der Stellung des Sprechers in Bezug zu den hörgeschädigten Personen.

2. Videounterstützte Einrichtung nach Anspruch 1, wobei das Kopfsprechhörergestell umfasst ein Kopfauflageteil (22), einen länglichen, die Kamera haltenden Arm (40) mit einem ersten Ende (40a), das von dem Kopfauflageteil gehalten wird, und einem zweiten Ende (40b), das die Kamera hält, erste Einstellungsmittel (28, 34, 38, 38a, 44) zur selektiven Einstellung der Position des Arms in Bezug zum Kopfauflageteil, und zweite Einstellungsmittel (46) zur selektiven Einstellung der Orientierung der Kamera in Bezug zu dem Arm, wobei die Kamera vor dem Mund des Sprechers und in allgemeiner Ausrichtung zum Mund des Sprechers angeordnet ist.

3. Videounterstützte Einrichtung nach Anspruch 2, wobei der Sender an einer Stelle entfernt von dem Kopfsprechhörergestell am Sprecher angebracht ist und die videounterstützte Einrichtung des Weiteren eine Leitung (50) umfasst, die die Kamera mit dem Sender verbindet.

4. Videounterstützte Einrichtung nach Anspruch 1, wobei der Sender die Bilder codiert und in einer der Wellenlängen von Funkwellen, Mikrowellen und Infrarotwellen überträgt und ein drahtloses Signal durch die Luft auf mindestens einen Empfänger überträgt.

5. Videounterstützte Einrichtung nach Anspruch 1, die mehrere Empfänger umfasst, von denen jeder mit einem Visualisierungsmittel verknüpft ist.

6. Videounterstützte Einrichtung nach Anspruch 1, die einen Empfänger umfasst, der mit mehreren getrennten Visualisierungsmitteln verbunden ist.

7. Videounterstützte Einrichtung nach Anspruch 1, wobei das Visualisierungsmittel (20) ein Fernsehbildschirm, ein Computerbildschirm, ein Plasmabildschirm, ein LED-Bildschirm oder ein LCD-Bildschirm ist.

8. Videounterstützte Einrichtung nach Anspruch 1, die des Weiteren ein Mikrofonelement, das vollständig an der Kamera befestigt ist, umfasst.

9. Verwendung einer videounterstützten Einrichtung (10) zur Unterstützung hörgeschädigter Personen, der Rede eines Sprechers zu folgen, **dadurch gekennzeichnet, dass** die videounterstützte Einrichtung (10) eine tragbare Miniaturkamera (14) umfasst, die abnehmbar vor dem Sprecher installiert und mindestens auf den Mund des Sprechers gerichtet ist, des Weiteren einen Sender (16), der wirksam mit der Kamera verbunden ist, um die von der Kamera aufgenommenen Videobilder zu codieren und dieselben in Echtzeit als Signal zu übertragen, wobei der Sender mit Energiemittel zur Versorgung der Kamera und des Senders mit Energie versehen ist, und die Einrichtung des Weiteren mindestens einen Empfänger (18) zum Empfang des Signals von dem Sender und zur Decodierung desselben in Videobilder und mindestens ein Visualisierungsmittel (20) aufweist, das wirksam mit dem Empfänger verbunden ist, um die von dem Empfänger decodierten Bilder zu visualisieren.

10. Unterrichtshilfssystem (10) zur Unterstützung von Lehrern beim Unterrichten hörgeschädigter Schüler, **dadurch gekennzeichnet, dass** die Unterrichtshilfe umfasst:
a) einen Kopfsprechhörer (12') mit einem gebogenen Hauptkörper (22') zur Befestigung auf dem Kopf eines Lehrers, und Befestigungselemente (24', 32') zur lösbaren Anbringung des Kopf sprechhörerkörpers um den Kopf des Lehrers;
b) einen verlängerten Arm (40') mit einem inneren Ende, das fest in den Hauptkörper des Kopfsprechhörers eingebaut ist, und einem äußeren, freien Ende, wobei der längliche Arm so geformt ist, dass er der Kontur des Gesichts des Lehrers folgt, und ausreichend lang ist, dass sein äußeres, freies Ende in allgemeiner Ausrichtung auf die Lippen des Lehrers angeordnet ist;
c) ein leichtes Spiegelelement (66), das vollständig von dem äußeren, freien Ende des Arms getragen wird und in optischer Ausrichtung auf die Lippen des Lehrers angeordnet ist und eine Linse (68) umfasst, deren Größe und Orientierung es ihr ermöglicht, mindestens die Lippen des Lehrers vollständig zu erfassen;
d) ein Kameraelement (60), das vollständig getragen wird von dem Hauptkörper des Kopfsprechhörers und eine Linse (62) mit einem Strahlengang definiert, der das Spiegellinsenelement kreuzt, wobei die Lippen des Lehrers für das Kameralinsenelement über optische Reflexion auf die Spiegelelementlinse voll sichtbar sind;
e) ein Videomonitorelement (20, 78), das geeignet ist, vor einem Schüler positioniert und von diesem Schüler visuell betrachtet zu werden; und
f) erste (16) und zweite (18, 76) Transceiverelemente, wobei das Erstere von dem Lehrer getragen wird und wirksam mit dem Kameraelement verbunden ist, die Letzteren wirksam mit dem Videomonitorelement für eine Echtzeit-Verbindung der von dem ersten Transceiverelement übertragenen Daten verbunden sind.

11. Unterrichtshilfssystem nach Anspruch 10, wobei die räumliche Stellung des Spiegels seitlich in einem spitzen Winkel in Bezug zur Sagittalebene des Lehrers versetzt ist

12. Unterrichtshilfssystem nach Anspruch 10, des Weiteren umfassend ein Mikrofon (47'), das vollständig von dem äußeren freien Ende des Arms seitlich am Spiegelelement (66) getragen wird und in akustischer Ausrichtung zum Mund des Lehrers angeordnet ist; und
eine Audiolautsprechereinheit, die in unmittelbarer Nähe zu einem Schüler und in akustischer Ausrichtung auf die Ohren des Schülers angebracht ist, wobei das Transceiverelement des Weiteren eine wirksame Verbindung zwischen dem Mikrofon und der Lautsprechereinheit schafft.

13. Unterrichtshilfssystem nach Anspruch 11, wobei der spitze Winkel im Bereich zwischen 30° und 45° in Bezug zu der Sagittalebene des Lehrers liegt, so dass der Schüler einen dynamischen isometrischen Blick auf die sich bewegenden Lippen des Lehrers gewinnt, um die visuellen Lippenlesefähigkeiten der Schüler zu verbessern.

14. Unterrichtshilfssystem nach Anspruch 10, wobei das Visualisierungsmittel ein Flachbild-Videomonitor (78) ist, und des Weiteren umfassend ein Kopfband (72) für den Schüler, einen starren, knieförmigen Tragarm (74), der mit ersten und zweiten entgegengesetzten Enden versehen ist und an einem Ende fest an dem Kopfband des Schülers befestigt ist, und ein Befestigungsgelenkelement (80), mit dem der Videomonitor schwenkbar verstellbar an dem anderen Ende des knieförmigen Tragarms befestigt ist, wobei der Videomonitor in einer Position angebracht ist, in der eine visuelle Betrachtung durch den Schüler leicht möglich ist, ohne dass die Sehlinie des Schülers zum Lehrer behindert ist.

15. Unterrichtshilfssystem nach Anspruch 10, wobei das Videomonitorelement (78) umfasst ein Kopfband (72) für den Schüler, einen starren, knieförmigen Tragarm (74), der mit ersten und zweiten entgegengesetzten Enden versehen ist und an einem Ende fest an dem Kopfband des Schülers befestigt ist, und ein Befestigungsgelenkelement (80), mit dem der Videomonitor schwenkbar verstellbar an dem anderen Ende des knieförmigen Tragarms befestigt ist, wobei der Videomonitor in einer Position angebracht ist, in der eine visuelle Betrachtung durch den Schüler leicht möglich ist, ohne dass die Sehlinie des Schülers zum Lehrer behindert ist.

16. Unterrichtshilfssystem nach Anspruch 14, des Weiteren umfassend ein Mikrofon (47'), das vollständig von dem Kopfspechhörergestell (12') seitlich am Spiegelelement (66) gehalten wird und in akustischer Ausrichtung auf den Mund des Lehrers angeordnet ist; und
eine Audioausgabeeinheit, die in unmittelbarer Nähe zu einem Schüler und in akustischer Ausrichtung auf die Ohren des Schülers anzubringen ist, wobei das Transceiverelement (76) des Weiteren eine wirksame Verbindung zwischen dem Mikrofon und der Lautsprechereinheit schafft.

17. Unterrichtshilfssystem nach Anspruch 15, des Weiteren umfassend ein Mikrofon (47'), das vollständig von dem äußeren freien Ende des Arms seitlich am Spiegelelement (66) gehalten wird und in akustischer Ausrichtung auf den Mund des Lehrers angeordnet ist; und
eine Audiolautsprechereinheit, die in unmittelbarer Nähe zu einem Schüler und in akustischer Ausrichtung auf die Ohren des Schülers anzubringen ist, wobei das Transceiverelement des Weiteren eine wirksame Verbindung zwischen dem Mikrofon und der Lautsprechereinheit schafft.

18. Unterrichtshilfssystem nach Anspruch 13, wobei der spitze Winkel etwa 30° beträgt.

19. Unterrichtshilfssystem nach Anspruch 10, des Weiteren umfassend:
a) ein zusätzliches Videomonitorelement, das vor dem Lehrer positioniert und vom Lehrer visuell betrachtet werden kann; und
b) ein drittes Transceiverelement, das in wirksamer Verbindung mit dem zusätzlichen Videomonitor für eine Echtzeit-Verbindung von Daten steht, die von dem ersten Transceiverelement übertragen wurden; wobei der Lehrer in der Lage sein wird, ständig zu beobachten, ob seine Lippen von dem Kameraelement kontinuierlich vollständig erfasst werden, wenn der Kopfsprechhörer unbeabsichtigt verrutscht ist oder abgenommen und wieder auf dem Kopf des Lehrers aufgesetzt wird, und er folglich die Position des Kopfhörers korrigieren kann, falls dies nötig ist.

## Revendications

1. Un appareil aidé par vidéo (10) destiné à un usage par un conférencier et par des personnes malentendantes, **caractérisé en ce que** ledit appareil aidé par vidéo (10) comprend:
a) un cadre de casque (12), destiné à être installé de façon amovible sur la tête d'un conférencier;
b) une caméra miniature (14) portée par ledit cadre de casque à l'avant de la bouche de ce conférencier et destinée à cibler au moins la bouche du conférencier afin d'en saisir des images vidéo continues;
c) un transmetteur (16) relié de façon fonctionnelle à ladite caméra, destiné à encoder les images vidéo saisies par la caméra et pour leur transmission instantanée sous forme d'un signal, ledit transmetteur comprenant des moyens d'énergie pour faire fonctionner ladite caméra et ledit transmetteur;
d) au moins un récepteur (18), destiné à recevoir le signal en provenance dudit transmetteur et à le décoder en des images vidéo; et
e) au moins un moyen de visualisation (20) relié de façon fonctionnelle à un dit récepteur, afin de visualiser les images décodées par ledit récepteur;
**caractérisé en ce qu'**au moins les mouvements des lèvres du conférencier peuvent être suivis de façon instantanée et simultanée par n'importe quel nombre de personnes malentendantes qui regardent le moyen de visualisation, nonobstant l'orientation de la tête ou la position du conférencier par rapport aux personnes malentendantes.

2. Un appareil aidé par vidéo tel que défini à la revendication 1,
**caractérisé en ce que** ledit cadre de casque comprend une portion engageant la tête, (22), un bras de support de caméra allongé (40) ayant une première extrémité (40a) supportée par ladite portion engageant la tête, et une seconde extrémité (40b) supportant ladite caméra, de premiers moyens d'ajustement (28, 34, 38, 38a, 44) for ajuster de façon sélective la position dudit bras relativement à ladite portion engageant la tête, et de seconds moyens d'ajustement pour ajuster de façon sélective l'orientation de ladite caméra relativement audit bras, **caractérisé en ce que** ladite caméra est placée à l'avant de la bouche du conférencier et vient généralement vis-à-vis celle-ci.

3. Un appareil aidé par vidéo tel que défini à la revendication 2,
**caractérisé en ce que** ledit transmetteur est situé en une position sur le conférencier qui est à distance dudit cadre de casque, ledit appareil aidé par vidéo comprenant en plus un fil (50) reliant ladite caméra audit transmetteur.

4. Un appareil aidé par vidéo tel que défini à la revendication 1,
**caractérisé en ce que** ledit transmetteur encode et transmet les images sous une forme choisie parmi les ondes radio, les micro-ondes ou les longueurs d'onde dans l'infra-rouge, et transmet un signal aérien sans fil audit au moins un récepteur.

5. Un appareil aidé par vidéo tel que défini à la revendication 1,
comprenant un certain nombre de récepteurs chacun relié à un moyen de visualisation.

6. Un appareil aidé par vidéo tel que défini à la revendication 1,
comprenant un récepteur relié à un certain nombre de moyens de visualisation séparés.

7. Un appareil aidé par vidéo tel que défini à la revendication 1,
**caractérisé en ce que** ledit moyen de visualisation (20) est choisi parmi un écran de télévision, un écran d'ordinateur, un écran d'affichage au plasma, un écran à diodes électroluminescentes, ou un écran à diodes à cristaux liquides.

8. Un appareil aidé par vidéo tel que défini à la revendication 1,
comprenant au surplus un organe de microphone, installé de façon solidaire sur ladite caméra.

9. L'emploi d'un appareil aidé par vidéo (10) afin de porter assistance à des personnes malentendantes qui suivent le discours d'un conférencier, **caractérisé en ce que** ledit appareil aidé par vidéo (10) comprend une caméra miniature portative (14) installée de façon amovible à l'avant du conférencier et ciblant au moins la bouche du conférencier, un transmetteur (16) relié de façon fonctionnelle à ladite caméra pour encoder les images vidéo saisies par cette caméra et pour leur transmission instantanée comme signal, ledit transmetteur comprenant des moyens d'énergie pour faire fonctionner ladite caméra et ledit transmetteur, ledit appareil comprenant en plus au moins un récepteur (18), pour recevoir le signal en provenance dudit transmetteur et pour le décoder en des images vidéo, et au moins un moyen de visualisation (20) relié de façon fonctionnelle à un dit récepteur, pour visualiser les images décodées par ledit récepteur.

10. Un système d'assistance pédagogique (10) pour aider les enseignants à enseigner à des étudiants malentendants, **caractérisé en ce que** ledit système d'assistance pédagogique comprend:
a) un casque (12') ayant un corps principal arrondi (22'), destiné à être installé autour de la tête d'un enseignant, et des éléments d'attache (24', 32'), destinés à relier de façon amovible ledit corps de casque autour de la tête de l'enseignant;
b) un bras allongé (40') ayant une extrémité intérieure solidaire dudit corps principal de casque et une extrémité extérieure libre, ledit bras allongé étant formé pour suivre le contour du visage de l'enseignant et ayant une longueur suffisante pour que son extrémité extérieure libre vienne vis-à-vis les lèvres de l'enseignant;
c) un élément léger de miroir (66), porté de façon solidaire par ladite extrémité extérieure libre de bras et en regard optiquement avec les lèvres de l'enseignant, et comprenant une lentille (68) dont la taille et l'orientation sont telles qu'elle est susceptible de saisir au moins les lèvres en entier de l'enseignant;
d) un élément de caméra (60), porté de façon solidaire par ledit corps principal de casque et définissant une lentille (62) ayant un chemin optique intersectant ledit élément de lentille de miroir, **caractérisé en ce que** les lèvres de l'enseignant sont visibles en entier par l'élément de lentille de caméra par le biais d'une réflection optique sur la lentille d'élément de miroir,
e) un élément de moniteur vidéo (20, 78), destiné à être placé à l'avant d'un étudiant et à être inspecté visuellement par cet étudiant; et
f) de premier (16) et de second (18,76) éléments émetteurs-récepteurs, le premier porté par ledit enseignant et relié de façon fonctionnelle audit élément de caméra, le dernier relié de façon fonctionnelle audit élément de moniteur vidéo pour un transfert instantané des données transmises par ledit premier élément émetteur-récepteur.

11. Un système d'assistance pédagogique tel que défini à la revendication 10,
**caractérisé en ce que** la position spatiale dudit miroir est déportée latéralement par un angle aigu relativement au plan sagittal de l'enseignant.

12. Un système d'assistance pédagogique tel que défini à la revendication 10,
comprenant en plus un microphone (47'), porté de façon solidaire par ladite extrémité extérieure libre de bras le long dudit élément de miroir (66) et en regard acoustique avec la bouche de l'enseignant; et
une unité de haut-parleur audio, destinée à être installée très proche d'un étudiant et en regard acoustique avec les oreilles de l'étudiant, **caractérisé en ce que** ledit élément émetteur-récepteur relie de plus de façon fonctionnelle ledit microphone à ladite unité de haut-parleur.

13. Un système d'assistance pédagogique tel que défini à la revendication 11,
**caractérisé en ce que** ledit angle aigu se trouve dans la fourchette entre 30° et 45° par rapport au plan sagittal de l'enseignant, de telle sorte que l'enseignant puisse obtenir une vue dynamique isométrique des lèvres en mouvement de l'enseignant pour améliorer les aptitudes visuelles de lire les lèvres de la part des étudiants.

14. Un système d'assistance pédagogique el que défini à la revendication 10,
**caractérisé en ce que** lesdits moyens de visualisation consistent en un moniteur vidéo à écran plat (78), et comprenant au surplus une bande de tête pour étudiant (72), un bras de support rigide coudé (74) ayant de première et de seconde extrémités opposées et installées de façon fixe à une extrémité sur ladite bande de tête d'étudiant, et un élément d'installation de pivotement (80) installant de façon pivotante et ajustable ledit moniteur vidéo sur l'autre extrémité dudit bras coudé, **caractérisé en ce que** ledit moniteur vidéo est situé en une position telle qu'il puisse être facilement inspecté visuellement par l'étudiant tout en continuant à pouvoir voir l'enseignant.

15. Un système d'assistance pédagogique tel que défini à la revendication 10,
**caractérisé en ce que** ledit élément de moniteur vidéo (78) comprend une bande de tête d'étudiant (72), un bras de support rigide coudé (74) ayant de première et de seconde extrémités opposées et installées de façon fixe à une extrémité sur ladite bande de tête d'étudiant, et un élément d'installation de pivotement (80) installant de façon pivotante et ajustable ledit moniteur vidéo sur l'autre extrémité dudit bras coudé, **caractérisé en ce que** ledit moniteur vidéo est situé en une position telle qu'il puisse être facilement inspecté visuellement par l'étudiant tout en lui permettant de continuer à voir l'enseignant.

16. Un système d'assistance pédagogique tel que défini à la revendication 14,
comprenant au surplus un microphone (47'), porté de façon solidaire par ledit cadre de casque (12') le long dudit élément de miroir (66) et en regard acoustique avec la bouche de l'enseignant; et
une unité de sortie audio, destinée à être installée très près d'un étudiant et en regard acoustique avec les oreilles de l'étudiant, **caractérisé en ce que** ledit élément émetteur-récepteur (76) relie en plus de façon fonctionnelle ledit microphone à ladite unité de haut-parleur.

17. Un système d'assistance pédagogique tel que défini à la revendication 15,
comprenant en plus un microphone (47'), porté de façon solidaire par ladite extrémité extérieure libre de bras le long dudit élément de miroir (66) et en regard acoustique avec la bouche de l'enseignant; et
une unité de haut-parleur audio, destinée à être installée très près d'un étudiant et en regard acoustique avec les oreilles de l'étudiant, **caractérisé en ce que** ledit élément émetteur-récepteur relie en plus de façon fonctionnelle ledit microphone à ladite unité de haut-parleur.

18. Un système d'assistance pédagogique tel que défini à la revendication 13,
**caractérisé en ce que** ledit angle aigu a une valeur d'environ 30° .

19. Un système d'assistance pédagogique tel que défini à la revendication 10,
comprenant en plus:
a) un élément de moniteur vidéo supplémentaire, destiné à être placé à l'avant de l'enseignant et à être inspecté visuellement par l'enseignant; et
b) un troisième élément émetteur-récepteur, relié de façon fonctionnelle audit moniteur vidéo supplémentaire pour un transfert instantané de données transmises par ledit premier élément émetteur-récepteur;
**caractérisé en ce que** l'enseignant sera en mesure de surveiller constamment si ses lèvres sont constamment saisies en entier par ledit élément de caméra, à tout moment lorsque ledit casque est déplacé accidentellement ou enlevé et réinstallé sur la tête de l'enseignant, ainsi que d'ajuster en conséquence ladite position du casque si nécessaire.
